# EUROPÄISCHE PATENTSCHRIFT

(11) **EP 3 451 496 B1**
(45) Veröffentlichungstag und Bekanntmachung des Hinweises auf die Patenterteilung: **12.08.2020**
(21) Anmeldenummer: 18184203.0
(22) Anmeldetag: 18.07.2018
(51) Int. Cl.: H02J 50/80

(54) **KOMMUNIKATION MIT LADEKABEL EINES BATTERIEELEKTRISCHEN FAHRZEUGS**
COMMUNICATION WITH CHARGING CABLE OF A BATTERY-POWERED VEHICLE
COMMUNICATION AVEC UN CÂBLE DE CHARGE D'UN VÉHICULE FONCTIONNANT SUR BATTERIE ÉLECTRIQUE

(30) Priorität: 30.08.2017 DE 102017215116
(43) Veröffentlichungstag der Anmeldung: 06.03.2019
(73) Patentinhaber: Heidelberger Druckmaschinen AG, 69115 Heidelberg (DE)
(72) Erfinder: Spilger, Rolf, 68519 Viernheim (DE); Heynig, Frank, 68526 Ladenburg (DE); Bechtler, Jochen, 69254 Malsch (DE); Breuninger, Timo, 68165 Mannheim (DE)

(56) Entgegenhaltungen:
- WO-A1-2010/022059
- US-A1- 2014 035 527

## Beschreibung

Die vorliegende Erfindung betrifft ein Verfahren zur Kommunikation zwischen einem Diagnose-PC und einem Ladekabel mit einer In-Kabel-Kontrollbox zur Aufladung batterieelektrischer Fahrzeuge.

Die Erfindung liegt dabei im technischen Gebiet der Ladeinfrastruktur für batterieelektrische Fahrzeuge.

Für das Laden batterieelektrischer Fahrzeuge ist eine spezifisch dafür geeignete Infrastruktur vonnöten. Diese umfasst neben der Anbindung an die lokalen Stromnetze vor allem eine Vielzahl von Steckertypen und Lademodi, mit denen die entsprechenden batterieelektrischen Fahrzeuge aufgeladen werden können. Gemäß der internationalen Norm IEC 61851 über das konduktive Laden von batterieelektrischen Fahrzeugen sind sowohl eine Reihe von Lademodi festgelegt, als auch verschiedenste Steckermodi referenziert. Die Lademodi umfassen dabei vier verschiedene Modi, welche im Modus 1 das langsame Laden an Haushaltssteckdosen bis 16A Stromstärke und im Modus 2 das Laden in ein- oder dreiphasigen Konfigurationen bis 32A vorsehen. Weitere Modi 3 und 4 umfassen die Schnellladung mit bis zu 250 Ampere sowie die Schnellladung mit Gleichstrom mit bis zu 400 Ampere. Die Modi 1 und 2 erlauben die Verwendung von Standard-Stecksystemen wie Schuko, womit der Anschluss an normale Haushaltssteckdosen möglich ist. Im Modus 2 ist das Vorhandensein einer sogenannten IC-CPD, kurz für "In Cable Control and Protective Device", auch als ICCB kurz für "In Cable Control Box - In-Kabel-Kontrollbox" bekannt, erforderlich. Dieses Gerät übernimmt Sicherheits- und Kommunikationsfunktionen für den Ladevorgang über das Stromnetz. Bei den Schnelllademodi 3 und 4 ist ein solches IC-CPD nicht erforderlich, da hier diese Funktionen von der Schnellladestation übernommen werden.

Die IC-CPD übernimmt entsprechend die Kommunikation mit der Fahrzeugelektronik, wobei zum Beispiel der Ladeelektronik im Fahrzeug der maximal mögliche Ladestrom mitgeteilt wird. Die IC-CPD übernimmt zudem noch weitere Funktionalitäten, wie die Schutzleiterüberwachung, die Prüfung der elektrischen Verbindungen zwischen PE-Leiter und Metallkarosserie, die Funktion des Fehlerstrom-Schutzschalters zur Vermeidung von Stromunfällen, die Überwachung bzw. Abschaltung des Ladevorganges bei Anomalien beim Laden, wie z.B. eine Überschreitung des maximal zulässigen Ladestroms , die Überschreitung der Temperatur des Steckers.

Damit die IC-CPD diese Funktionen erfüllen kann, besitzt sie üblicherweise einen integrierten Schaltkreis, in den meisten Fällen einen bestimmten Mikro-Controller mit einer entsprechenden Firmware. Wie bei allen Embedded-Software-Produkten ist auch bei einer IC-CPD ein Firmware-Update wünschenswert. Zudem ist es zur Durchführung von Fehlerdiagnosen notwendig, einen Fehlerspeicher der IC-CPD auszulesen. Um dies durchführen zu können, ist also eine Kommunikationsverbindung mit der IC-CPD notwendig. Da die Ladekabel einschließlich der IC-CPD jedoch für einen gefahrlosen Gebrauch gut isoliert sein müssen und über eine hohe IP-Schutzklasse, wie z. B. IP64 verfügen, ist es extrem aufwändig, im Gehäuse des Ladekabels, bzw. der IC-CPD zusätzliche Hardware-Interfaces für einen Diagnose-Stecker anzubringen.

Prinzipiell ist es zwar möglich, mit der IC-CPD mittels Powerline zu kommunizieren, jedoch muss dafür die IC-CPD mit entsprechender PLC-Hardware ausgerüstet werden. Da dies einen nicht unerheblichen Kostenfaktor darstellt, der die Wirtschaftlichkeit aktueller Ladekabel in Frage stellt, wird nach einer alternativen Möglichkeit der Kommunikation mit der IC-CPD des Ladekabels gesucht. Drahtlose Kommunikationsschnittstellen wie WLAN oder Bluetooth weisen dabei dasselbe Problem auf wie die Kommunikation über PLC. Auch hierfür wären zusätzliche Hardwarekosten in Form von Modems oder Modulen notwendig, welche die Wirtschaftlichkeit des Ladekabels entsprechend beeinträchtigen.

Aus der Patentanmeldung US 2014/0035527 A1 ist ein tragbares Elektroauto-Versorgungskit bekannt, welches einen Adapter enthält, welcher mit dem Ladeanschluss eines Elektroautos verbunden werden kann. Dieses tragbare Elektroauto-Versorgungskit enthält einen Controller, wobei das elektrische Ladekabel eine Verbindung zum Laden des Autos hat sowie eine Datenleitung zur Übertragung von Daten über den elektrischen Anschluss an einen externen Rechner. Der externe Rechner wird dabei über ein aufsteckbares Modul mit einer USB-Schnittstelle auf das Ladekabel aufgesteckt und kann somit Daten an einen Prozessor innerhalb des Ladekabels übertragen.

Die Patentanmeldung WO 2010/022059 A1 zeigt ein Ladesystem für ein Elektroauto, welches einen Controller enthält, mit welchem der Nutzer den Beginn der Ladezeit für das Elektroauto eingeben kann und ebenso das Ende des Ladevorgangs. Die Ladevorrichtung kann dabei vom Auto getrennt sein, kann aber auch zumindest teilweise in das Auto integriert sein. Sie enthält eine Vorrichtung, um eine Kommunikation mit einem Controller durchzuführen, welcher außerhalb des Autos und außerhalb der Ladeeinrichtung angeordnet ist. Damit kann ein Dritter den Ladevorgang zeitgesteuert einstellen.

Aufgabe ist es daher ein Verfahren zur Kommunikation zwischen einem Diagnosegerät, bevorzugt einem PC, und einem Ladekabel mit einer In-Kabel-Kontrollbox zu finden, welches ohne zusätzliche Kommunikationsmodule in der In-Kabel-Kontrollbox auskommt und die IP-Schutzklasse nicht beeinträchtigt.

Die vorliegende Aufgabe wird durch Patentanspruch 1 gelöst.

Dafür wird eine Hardware-Schnittstelle verwendet, welche zwischen der In-Kabel-Kontrollbox des Ladekabels und dem Rechner platziert wird. Diese Hardware-Schnittstelle, welche zum Beispiel in Form eines Adapters realisiert werden kann, ist dann mit dem Rechner direkt verbunden, so dass Daten, welche von der In-Kabel-Kontrollbox des Ladekabels an den Rechner gesendet werden sollen, von dieser auf die Datenleitung geschickt werden, so dass die Hardware-Schnittstelle, welche Zugriff auf die Datenleitung hat, diese Daten erhält, konvertiert und dann an den Rechner über die direkte Verbindung mit dem Rechner verschicken kann. Daten, welche umgekehrt vom Rechner an die In-Kabel-Kontrollbox geschickt werden sollen, werden vom Rechner zuerst über die direkte Verbindung an die Hardware-Schnittstelle geschickt und von dieser dann auf das Signal der Datenleitung moduliert und damit an die In-Kabel-Kontrollbox des Ladekabels gesendet. Mittels der Hardware-Schnittstelle wird also der interne Kommunikationskanal der In-Kabel-Kontrollbox, welcher eigentlich für die Kommunikation mit dem batterieelektrischen Fahrzeug gedacht ist, ausgenutzt, um direkt mit dem Rechner kommunizieren zu können, ohne eine zusätzliche Schnittstelle in Form eines Diagnosesteckers im Gehäuse oder zusätzlicher Kommunikationsmodule in der In-Kabel-Kontrollbox zu schaffen. Die Kommunikation zwischen Adapter und In-Kabel-Kontrollbox muss dabei die Spezifikationen der zuständigen Normen für das Laden eines batterieelektrischen Fahrzeugs über das Ladekabel mit In-Kabel-Kontrollbox gemäß IEC-61851 und IEC-62752 erfüllen, um entsprechend kompatibel zu bleiben. Die Verwendung eines solchen Adapters, der extern aufgesteckt werden kann und nur Fachkräften in der Werkstatt zur Verfügung stehen muss, ist dabei deutlich kostengünstiger als die standardmäßige Installation von Kommunikationsmodulen wie PLC, WLAN oder Bluetooth innerhalb der In-Kabel-Kontrollbox.

Vorteilhafte und daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass der Datenaustausch zwischen der Hardware-Schnittstelle und Rechner mittels serieller Schnittstelle (z.B.: USB, RS232, ...) realisiert wird und die Konvertierung der Daten von der Hardware-Schnittstelle auf serielles Protokoll -durchgeführt wird.

In dem erfindugsgemässen Verfahren sind die Daten vom Rechner an die In-Kabel-Kontrollbox des Ladekabels von der Hardware-Schnittstelle durch eine Modifikation des Spannungspegels, insbesondere durch Amplitudenumtastung (ASK), auf das Signal der Datenleitung moduliert Die Kommunikation vom Rechner an die In-Kabel-Kontrollbox des Ladekabels wird dabei gemäß der IEC 61851 Typ 2 näher spezifiziert. Diese sieht vor, dass Kommunikation zur In-Kabel-Kontrollbox durch Modifikation des Spannungspegels in Form von Amplitudenumtastung durchgeführt wird. Im erfindungsgemäßen Verfahren wird dies durch die Hardware-Schnittstelle realisiert, um die In-Kabel-Kontrollbox über normgerechte Pegel anzusprechen.

In dem erfindugsgemässen Verfahren sind die Daten von der In-Kabel-Kontrollbox des Ladekabels an den Rechner von der In-Kabel-Kontrollbox des Ladekabels durch eine Modifikation der Pulsweite des Signals der Datenleitung moduliert und an die Hardware-Schnittstelle gesendet welche die

Daten an den Rechner weiterleitet. Die Kommunikation von der In-Kabel-Kontrollbox an den Rechner wird dabei, ebenfalls gemäß der IEC 61851Typ 2, mittels einer Pulsweiten-Modulation (PWM) durchgeführt. Um die Kommunikation über serielles Protokoll zum Rechner durchzuführen, werden die pulsweitenmodulierten Signale auf der Signalleitung des Ladekabels von der Hardware-Schnittstelle entsprechend empfangen, konvertiert und an den Rechner weitergesendet.

Eine weitere bevorzugte Weiterbildung des erfindungsgemäßen Verfahrens ist dabei, dass die von der In-Kabel-Kontrollbox des Ladekabels an den Rechner gesendeten Daten von der Hardware-Schnittstelle für die Konvertierung durch Ausmessen der Pulsweite des Signals der Datenleitung und deren zeitlicher Abfolge berechnet werden. Die Berechnung der von der In-Kabel-Kontrollbox des Ladekabels an den Rechner gesendeten Daten wird von der Hardware-Schnittstelle durchgeführt, wobei diese die Pulsweite des Signals ausmisst und unter Berücksichtigung der zeitlichen Abfolge der PWM-Signale die gesendeten Daten ermittelt. Diese werden dann an den extern angeschlossenen Rechner weitergeleitet.

Eine weitere bevorzugte Weiterbildung des erfindungsgemäßen Verfahrens ist dabei, dass der Datenaustausch bidirektional und duplexfähig erfolgt, indem gleichzeitig die Pulsweite des Signals der Datenleitung moduliert wird und die Modifikation des Spannungspegels stattfindet. Die entsprechend bidirektionale Kommunikation ist dabei voll duplexfähig. Dies bedeutet, dass gleichzeitig vom Rechner Daten an die In-Kabel-Kontrollbox gesendet werden können, während Daten von der In-Kabel-Kontrollbox an den Rechner gesendet werden können. Dies liegt daran, dass beide Kommunikationsrichtungen unterschiedliche Aspekte oder Eigenschaften des Datensignals modulieren. Die In-Kabel-Kontrollbox moduliert die Daten über die Manipulation der Pulsweite, während in der umgekehrten Richtung die Hardware-Schnittstelle eine Modifikation des Spannungspegels durchführt.

Eine weitere bevorzugte Weiterbildung des erfindungsgemäßen Verfahrens ist dabei, dass für die Modulation der Pulsweite des Signals der Datenleitung mehrere verschiedene Pulsweiten und für die Modifikation des Spannungspegels mehrere verschiedene Spannungspegel verwendet werden, um die Datentransferrate des Datenaustauschs zu erhöhen. Da die Standard-Kommunikation gemäß Pulsweite-Modulation und Amplitudenumtastung lediglich eine geringe Datenrate von nicht mehr als 111 Byte/s ermöglichen, können über die Verwendung zusätzlicher Pulsweiten sowie Spannungspegel entsprechend mehr Bits kodiert werden und damit eine höhere Daten-Transferrate von bis zu 500 Byte/s erreicht werden.

Erfindungsgemäß ist bei dem vorliegenden Verfahren vorgesehen, dass zum Senden von Daten vom Rechner an die In-Kabel-Kontrollbox des Ladekabels nur der negative Teils des Spannungspegels modifiziert wird, um den Datenaustausch zwischen der In-Kabel-Kontrollbox des Ladekabels und dem Rechner parallel zu einem Ladevorgang eines batterieelektrischen Fahrzeugs über das Ladekabel durchzuführen. Die bisherigen Versionen des erfindungsgemäßen Verfahrens wurden unter Verwendung einer Hardware-Schnittstelle in Form eines Adapters durchgeführt, bei welchen dieser Adapter in die Buchse der In-Kabel-Kontrollbox gesteckt wurde und dann der Adapter mit dem Rechner verbunden wurde. Nachteil dieses Vorgehens ist jedoch, dass hier mittels des Ladekabels mit seiner In-Kabel-Kontrollbox nicht gleichzeitig ein batterieelektrisches Fahrzeug geladen werden kann. Um dies zu ermöglichen, wird ein Adapter mit einem zusätzlichen Stecker verwendet, mit dem, ähnlich wie bei einem T-Stück, die In-Kabel-Kontrollbox mit dem batterieelektrischen Fahrzeug verbunden wird, während gleichzeitig die In-Kabel-Kontrollbox ebenfalls mit dem Rechner verbunden ist. Da in diesem Fall jedoch die In-Kabel-Kontrollbox mit der Ladeschaltung des batterieelektrischen Fahrzeugs gemäß Norm über Pulsweiten-Modulation und Amplitudenumtastung des positiven Signalpegels kommuniziert, muss die Kommunikation zwischen In-Kabel-Kontrollbox und Rechner angepasst werden. Da die In-Kabel-Kontrollbox nicht gleichzeitig mit dem batterieelektrischen Fahrzeug und dem Rechner bzw. der Hardware-Schnittstelle, welche die Daten von der In-Kabel-Kontrollbox für den Rechner konvertiert, kommunizieren kann, muss ein dritter Kommunikationskanal geschaffen werden. Für diesen wird der negative Pegel des Datensignals verwendet. Für die bisherige Kommunikation an die In-Kabel-Kontrollbox wird per Amplitudenumtastung nur der positive Pegel verwendet. Dies bedeutet, durch Modifikation des negativen Pegels steht ein weiterer Kommunikationskanal zur Verfügung. Das Datensignal wird also gemäß dieser Verfahrensvariante dreifach modifiziert. Einmal durch die Pulsweiten-Modulation zur Kommunikation von In-Kabel-Kontrollbox mit dem batterieelektrischen Fahrzeug; einmal durch Amplitudenumtastung des positiven Signalpegels zur Kommunikation von batterieelektrischem Fahrzeug mit der In-Kabel-Kontrollbox und einmal durch Amplitudenumtastung des negativen Signalpegels zur Kommunikation zwischen In-Kabel-Kontrollbox und Hardware-Schnittstelle, bzw. angeschlossenem Rechner. In diesem Verfahren ist die Kommunikation zwischen In-Kabel-Kontrollbox und Hardware-Schnittstelle allerdings nur noch im Halbduplex möglich. Dies bedeutet, dass man im genannten Kommunikationskanal zwischen Hardware-Schnittstelle, bzw. Rechner und In-Kabel-Kontrollbox entweder senden oder empfangen kann. Als Konsequenz daraus wird die Kommunikation mit der Hardware-Schnittstelle nach dem Master-Slave- Prinzip durchgeführt. D. h., der Rechner sendet über die Hardware-Schnittstelle eine Anfrage an die In-Kabel-Kontrollbox, auf die diese dann dementsprechend antwortet.

Eine weitere bevorzugte Weiterbildung des erfindungsgemäßen Verfahrens ist dabei, dass die Modifikation des negativen Spannungspegels zeitlich so gestaucht wird, dass die modifizierten Spannungspegel in die Low-Phase eines PWM-Signals passen, um damit die Datentransferrate des Datenaustauschs zu erhöhen. Da bei Modifikationen des negativen Spannungspegels ebenfalls wieder nur entsprechend niedrige Datentransfer-Raten von 111 Bytes/s möglich sind, ist eine Weiterbildung des Verfahrens, dass die modifizierten negativen Spannungspegel in dem Low-Bereich eines PWM-Signals eingepasst werden. Damit ist es möglich, die Datentransfer-Rate auf bis zu 1.000 Bytes/s zu erhöhen.

Eine weitere bevorzugte Weiterbildung des erfindungsgemäßen Verfahrens ist dabei, dass die Daten von der In-Kabel-Kontrollbox des Ladekabels an den Rechner Daten zur Fehlerdiagnose und Betriebsstatistik umfassen. Die Daten, welche von der In-Kabel-Kontrollbox an den Rechner gesendet werden, sind in der Hauptsache Daten zur Fehlerdiagnose. Dafür wird üblicherweise der Fehlerspeicher der In-Kabel-Kontrollbox ausgelesen und dessen Inhalt dann an den Rechner gesendet. Gleichfalls können die Daten jedoch auch allgemein Informationen über die Betriebsstatistik beinhalten, welche zur Auswertung des Einsatzes der In-Kabel-Kontrollbox nützlich sind oder zur Kostenabrechnung der Ladevorgänge herangezogen werden können.

Eine weitere bevorzugte Weiterbildung des erfindungsgemäßen Verfahrens ist dabei, dass die Daten vom Rechner an die In-Kabel-Kontrollbox des Ladekabels Softwareupdates für die In-Kabel-Kontrollbox des Ladekabels umfassen. Jedoch sind auch andere Arten von Daten, wie z. B. Konfigurationsfiles oder ähnliches, denkbar.

Eine weitere Lösung der gestellten Aufgabe stellt zudem ein Adapter, der eine Hardware-Schnittstelle zur Durchführung des erfindungsgemäßen Verfahrens realisiert dar, welcher dadurch gekennzeichnet ist, dass der Adapter einerseits einen Fahrzeugstecker aufweist der auf die Fahrzeugkupplung der In-Kabel-Kontrollbox gesteckt wird, andererseits einen USB-Stecker aufweist, mittels derer der Adapter mit dem Rechner verbunden wird, während ein im Adapter befindlicher Mikrokontroller einen Datenaustausch zwischen Rechner und In-Kabel-Kontrollbox des Ladekabels über eine serielle Schnittstelle durchführt. Um das entsprechende erfindungsgemäße Verfahren zu realisieren, ist eine Hardware-Schnittstelle notwendig, welche in Form eines Adapters realisiert wird. Dieser Adapter wird an die Fahrzeugkupplung der In-Kabel-Kontrollbox gesteckt, welche normalerweisen mit dem batterieelektrischen Fahrzeug verbunden wird. Die verwendeten Fahrzeugstecker und Fahrzeugkupplungen sind in der Norm IEC 62196 spezifiziert. Der Adapter weist dabei einen entsprechenden Fahrzeugstecker auf, der mit der Fahrzeugkupplung der In-Kabel-Kontrollbox verbunden wird, sowie einen weiteren Stecker, zum Beispiel in Form eines USB-Steckers, welcher dann mit dem Rechner verbunden wird. Des Weiteren weist der Adapter einen Mikrokontroller auf, welcher eine integrierte serielle Schnittstelle besitzt, mittels derer der Datenaustausch zwischen dem Adapter und dem Rechner durchgeführt wird. Die Fahrzeugkupplung, bzw. Fahrzeugstecker, weisen dabei die üblichen drei Phasen L1 bis L3, einen Neutralleiter, einen Schutzleiter sowie die Datensignal-Leitung (CP-Signal) auf. Damit ist es möglich, die interne Datenleitung, mit der normalerweise die In-Kabel-Kontrollbox mit dem batterieelektrischen Fahrzeug kommuniziert, zu kontaktieren und zur Kommunikation mit dem Rechner zu verwenden.

Eine weitere bevorzugte Weiterbildung des erfindungsgemäßen Adapters ist dabei, dass der Adapter neben dem Fahrzeugstecker zusätzlich eine Fahrzeugkupplung aufweist, die mit einem batterieelektrischen Fahrzeug verbunden wird, wodurch gleichzeitig ein Ladevorgang des batterieelektrischen Fahrzeugs und der Datenaustauschs über eine serielle Schnittstelle mit dem Rechner möglich ist. In dieser weiterführenden Variante weist der Adapter noch eine zusätzliche Fahrzeugkupplung auf, so dass der Adapter einen Fahrzeugstecker, eine Fahrzeugkupplung und einen USB-Stecker besitzt. Damit ist, ähnlich einem T-Stück, eine Verbindung zwischen der In-Kabel-Kontrollbox gleichzeitig mit dem batterieelektrischen Fahrzeug und dem externen Rechner möglich. Somit kann gleichzeitig ein Ladevorgang des batterieelektrischen Fahrzeugs und die Kommunikation zwischen Rechner und In-Kabel-Kontrollbox durchgeführt werden.

Eine weitere bevorzugte Weiterbildung des erfindungsgemäßen Adapters ist dabei, dass der Adapter so eingerichtet ist, dass er zur Kontaktaufnahme mit der In-Kabel-Kontrollbox negative oder positive Spannungspegel mit Amplitudenwerten verwendet, die vom batterieelektrischen Fahrzeug auf der Datenleitung nicht erzeugt werden können. Der Pegel mit Amplitudenwert von -12V wurde gewählt da ein Elektrofahrzeug (EV) diesen nicht erzeugen kann. Somit ist eine sichere Abgrenzung zum Elektrofahrzeug möglich. Befindet sich die IC-CPD im Fehlerzustand F (CP-Signal -12V) verändert der Adapter diesen Pegel auf +12V. Auch diesen Pegelwert kann das Elektrofahrzeug in diesem Zustand nicht erzeugen.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: Ladevorgang eines batterieelektrischen Fahrzeugs
- Figur 2:: erfindungsgemäße Kommunikation mit dem Ladekabel
- Figur 3:: funktionaler Aufbau des Adapters mit Pinbelegung
- Figur 4:: erfindungsgemäße gleichzeitige Durchführung von Kommunikation mit dem Ladekabel und Ladevorgang des batterieelektrischen Fahrzeugs
- Figur 5:: struktureller Aufbau des Adapters mit Gehäuse
- Figur 6:: Schaltplan des erfindungsgemäßen Systems in einer ersten Ausführung
- Figur 7:: erfindungsgemäße Modulation der Daten auf der Signalleitung in einer ersten Ausführung
- Figur 8:: Schaltplan des erfindungsgemäßen Systems in einer zweiten Ausführung
- Figur 9:: Schaltplan des erfindungsgemäßen Systems in einer dritten Ausführung
- Figur 10:: erfindungsgemäße Modulation der Daten auf der Signalleitung in einer dritten Ausführung
- Figur 11:: erfindungsgemäße Modulation der Daten auf der Signalleitung in einer vierten Ausführung

Die Kommunikation zwischen dem Ladekabel, bzw. der IC-CPD 3 und dem batterieelektrischen Fahrzeug 6 ist in den Normen IEC-61851 und IEC-62752 geregelt. Diese sieht u.a. vor, dass das Ladekabel, also die IC-CPD 3, einen PWM-Generator mit 1kOhm Innenwiderstand besitzt, die Grundfrequenz des Pulsweitenmodulierten Signals (PWM-Signal) 13 1kHz beträgt, Informationen vom Ladekabel (IC-CPD 3) zum batterieelektrischen Fahrzeug 6 durch Veränderung der Pulsbreite übermittelt werden und Informationen vom batterieelektrischen Fahrzeug 6 zum Ladekabel (IC-CPD 3) durch Veränderung des positiven Signalpegels übermittelt wird.

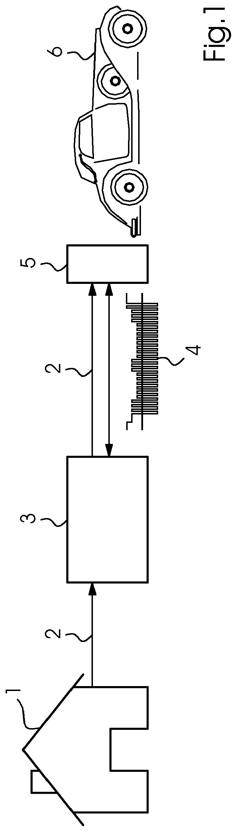

Figur 1 zeigt ein Beispiel für den strukturellen Aufbau zwischen batterieelektrischem Fahrzeug 6, Ladekabel und dem Stromnetz 1, welches den Ladestrom 2 bereitstellt. Ein Standard-Ladekabel weist dabei keine zusätzlichen Schnittstellen zur Fehlerdiagnose oder zum Softwareupdate auf. Als zusätzliche drahtlose Schnittstellen wären z.B. Bluetooth, WLAN, Zigbee© möglich. Mögliche leitungsgebundene Schnittstellen sind z.B. USB 9, RS232 oder auch Ethernet (TCP/IP). Allen Schnittstellen gemeinsam ist der Nachteil, dass zusätzliche Herstellkosten für die (von außen zugängliche) Schnittstelle anfallen und das Produkt entsprechend verteuern. Eine leitungsgebundene Schnittstelle muss zusätzlich noch abgedichtet werden.

Mit der vorliegenden Erfindung werden diese Nachteile vermieden. Eine Kommunikation zur Fehlerdiagnose, zum Informationsaustausch und zum Softwareupdate kann ohne zusätzliche Hardware im Ladekabel erfolgen.
Basierend auf den Vorgaben aus der IEC-61851 und IEC-62752 wurden für die Kommunikation mit dem Ladekabel mehrere Verfahren entwickelt.

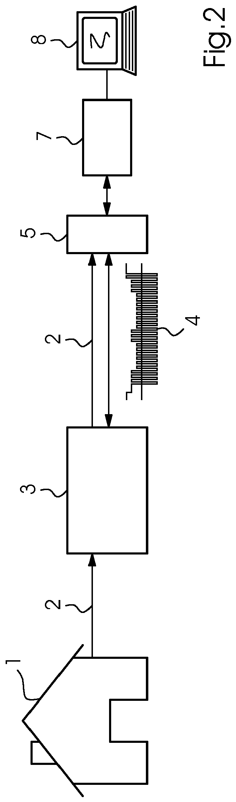

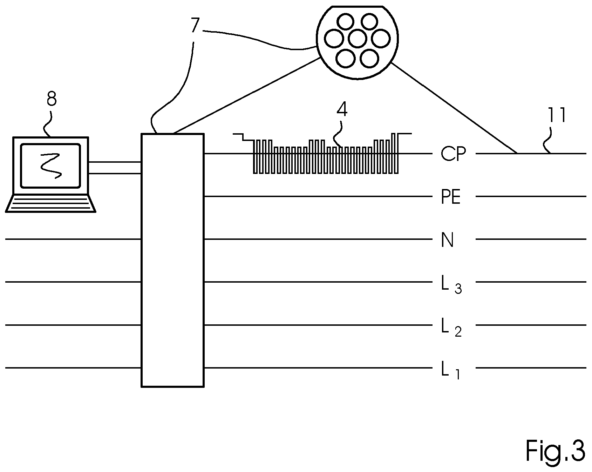

Um diese Verfahren umsetzen zu können wird zwischen einem Rechner in Form eines Diagnose-PCs 8 und dem Ladekabel ein spezieller Kommunikations-Adapter 7 geschaltet. Figur 2 zeigt den hierfür notwendigen strukturellen Aufbau zwischen dem Ladekabel und dem Diagnose-PC 8, mit welchem die Daten 4 für Fehlerdiagnose und/oder Firmware-Updates der IC-CPD 3 ausgetauscht werden können. Der Aufbau hierfür wird schematische in Figur 3 aufgezeigt. Dort ist dargestellt, wie mittels des Adapters 7 das CP-Signal 4 erfasst und ausgewertet wird. Zudem werden die Pins eines entsprechenden Fahrzeugsteckers 10 für den Mode 2 aufgezeigt, welche vom Adapter 7 verwendet werden.

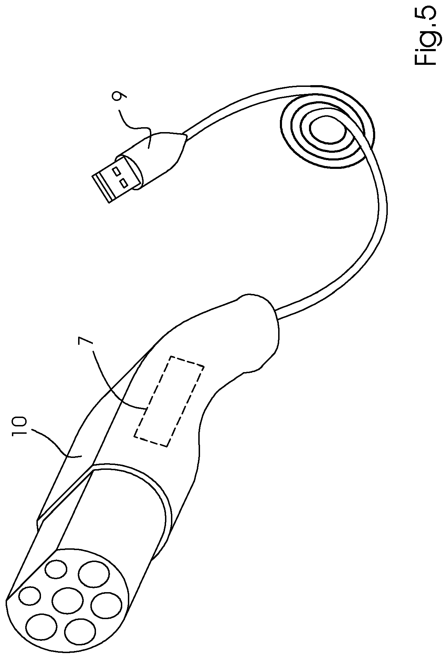

In Figur 5 ist zudem der strukturelle Aufbau eines, in einem Fahrzeugstecker 10 gemäß IEC 62196 Typ 2, integrierten Adapters 7 zum Anschluss an die Fahrzeugkupplung 5 der IC-CPD 3, sowie eines USB-Steckers Typ A 9 zum Anschluss an den Diagnoserechner 8 samt Gehäuse dargestellt.

Der Adapter 7 besitzt einen Mikrokontroller, welcher den Datentransfer zwischen IC-CPD 3 und dem Diagnose-PC 8 kontrolliert. Dieser vermisst grundlegend die Pulsbreite des PWM-Signals 13 auf der CP-Signalleitung 11. Aus der zeitlichen Abfolge der gemessenen Pulsbreiten berechnet er das vom Ladekabel gesendete Byte und schickt dieses über einen Standartschnittstelle (UART) zum Diagnose-PC 8. Des Weiteren empfängt der Kommunikations-Adapter 7 an der UART-Schnittstelle vom Diagnose-PC 8 Informationen und schickt diese an das Ladekabel weiter, in dem er die Spannungspegel des Datensignals 4 modifiziert.

Um die Kommunikations-Verbindung zum Ladekabel aufzubauen zieht der Kommunikations-Adapter dabei das CP-Signal 4 für 50ms auf -12V. Danach wird geprüft, ob sich das Ladekabel im Kommunikationsmodus befindet (PWM-Signal 13 liegt an). Ist dem nicht der Fall wird der Vorgang mit +12V wiederholt. Ist nach 1 Sekunde keine Kommunikation zum Ladekabel aufgebaut wird der Vorgang abgebrochen.

Der Pegel -12V wurde gewählt da ein Elektrofahrzeug (EV) diesen nicht erzeugen kann. Somit ist eine sichere Abgrenzung zum Elektrofahrzeug möglich. Befindet sich die IC-CPD im Fehlerzustand F (CP-Signal -12V) verändert der Kommunikations-Adapter diesen Pegel auf +12V. Auch diesen Pegel kann das Elektrofahrzeug nicht erzeugen.

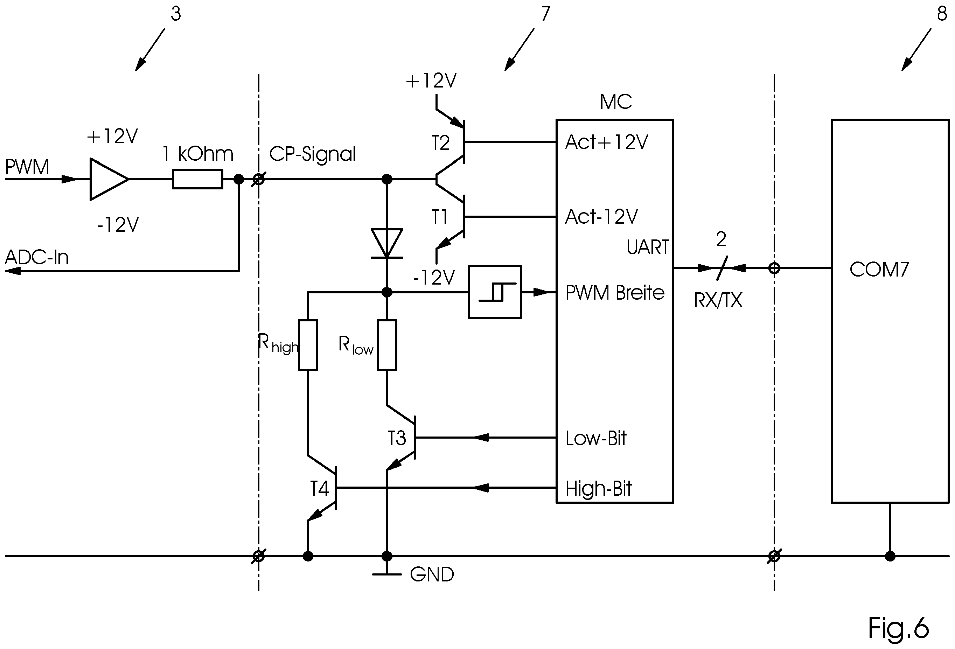

Der schematische Aufbau des Gesamtsystems, mit den beteiligten Komponenten des Adapters 7, des Diagnose-PCs 8 und der IC-CPD 3 ist dabei in einem Schaltplan in Figur 6 offengelegt. Figur 6 zeigt dabei eine erste bevorzugte Ausführungsform, in welcher der Diagnose-PC 8 direkt über den Adapter 7 an die Fahrezeugkupplung 5 der IC-CPD 3 angeschlossen wird. Hier kann während der Kommunikation das Ladekabel nicht gleichzeitig zum Aufladen des batterieelektrischen Fahrzeugs 6 verwendet werden, da der Ausgang der IC-CPD 5 durch den Stecker 10 des Adapters 7 belegt ist.

Während des Verbindungsaufbaus legt die IC-CPD 5 +12V (Zustand A) an das CP-Signal 4. Sobald der Kommunikations-Adapter 7 vom Diagnose-PC 8 das Kommando zum Kommunikationsaufbau erhalten hat, schaltet er mit dem Signal Act-12V und t1 für 50ms - 12Volt auf das CP-Signal 4. Wenn die IC-CPD 3 dies feststellt wird das PWM-Signal 13 freigeschaltet. Zum Datenaustausch vom Kommunikations-Adapter 7 zur IC-CPD 3 ist dem Low-Bit und dem High-Bit je ein Spannungspegel zugeordnet. Zum Datenaustausch von der IC-CPD 3 zum Kommunikations-Adapter 7 ist dem Low-Bit und dem High-Bit je eine Pulsbreite am CP-Signal 4 zugeordnet. Da die PWM-Frequenz in der Norm IEC-61851 auf 1kHz festgelegt ist und pro PWM-Impuls nur ein Bit übertragen wird, liegt die erreichte Übertragungsrate lediglich bei 111 Byte/sec (8N1)

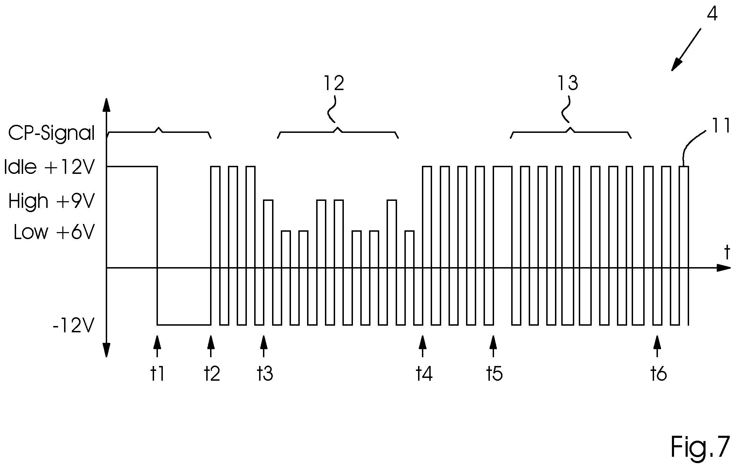

In Figur 7 ist das CP-Signal während des Verbindungsaufbaus und der Kommunikation dargestellt. Zum Zeitpunkt t1 legt der Kommunikations-Adapter 7 -12V auf das CP-Signal 4 und zeigt der IC-CPD 3 an, dass die Kommunikationsverbindung aufgebaut werden soll. Zum Zeitpunkt t2 schaltet der Kommunikations-Adapter 7 die -12V wieder ab; somit kann sich das PWM-Signal 13 (Pulsbreite-Idle), das die IC-CPD 3 mittlerweile eingeschaltet hat, durchsetzen. Zu Zeitpunkt t3 beginnt der Kommunikations-Adapter 7 mittels Amplitudenumtastung 12 ein Byte zur IC-CPD 3 zu senden. Zuerst ein Startbit (Pegelhigh) danach 8 Datenbits (MSB-first 00110010t -> 0x32). Am Zeitpunkt t4 ist das Senden beendet. Zum Zeitpunkt t5 beginnt die IC-CPD 3 ein Byte zum Kommunikations-Adapter 7 zu senden. Zuerst mit einem Startbit (300µs breit) danach 8 Datenbits MSB-first 11001101t->0xcd.

Da sich Senden und Empfangen auf unterschiedliche Aspekte des CP-Signals 4 beziehen, ist die Übertragung voll duplexfähig. Denn die Kommunikation von der IC-CPD 3 zum Diagnose-PC 8 geschieht über PWM, die umgekehrte Richtung über Amplitudenumtastung 12, was beides gleichzeitig möglich ist. Das heißt es kann unabhängig voneinander gesendet und empfangen werden.

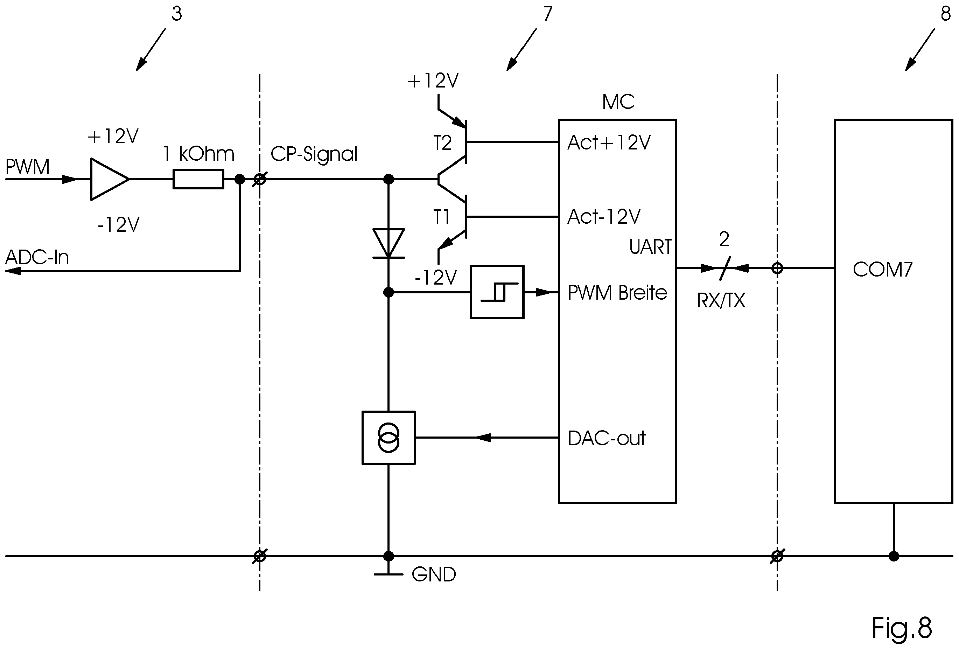

Um die Übertragungsrate, bzw. die Datentransferrate, zu erhöhen, wird eine zweite bevorzugte Ausführungsvariante des Verfahrens vorgeschlagen. Die entsprechend notwendige Hardwarekonfiguration ist in Figur 8 dargestellt. Bei dieser Variante werden mehrere, bevorzugt 16, Spannungspegel verwendet um die Information vom Kommunikations-Adapter 7 zur IC-CPD 3 zu kodieren. Ebenso werden mehrere, bevorzugt 16, verschiedene Pulsweiten am CP-Signal 4 verwendet um die Information vom Kommunikations-Adapter 7 zur IC-CPD 3 zu kodieren. Dafür werden, T3, T4, R_{low} und R_{high} durch eine steuerbare Stromquelle ersetzt. Damit können pro PWM-Impuls mehrere Bits übertragen werden. Da somit ein Byte mit zwei PWM-Impulse übertragen werden kann, steigt die Übertragungsrate somit auf 500Byte/sec. (16Pegel bei 8N0) Theoretisch kann diese Quantisierung noch weiter erhöht werden. Dadurch erhöht sich aber auch die Anforderung an die Messwerterfassung in der IC-CPD 3 was wiederum zu Mehrkosten führt.

In der folgenden Tabelle ist ein Beispiel für eine 16Bit-Quantisierung dargestellt:

| **Pegel [V]** | **Strom [mA]** | **Pulsbreite [µs]** | **Kodierung** |
|---|---|---|---|
| 9.000 | 3.000 | 950 | 1111t -> 0xf -> 15 |
| 8,625 | 3,375 | 900 | 1110t -> 0xe -> 14 |
| 8,250 | 3,750 | 850 | 1101t -> 0xd -> 13 |
| 7,875 | 4,125 | 800 | 1100t ->0xc -> 12 |
| 7,500 | 4,500 | 750 | 1011t ->0xb -> 11 |
| 7,125 | 4,875 | 700 | 1010t -> 0xa -> 10 |
| 6,750 | 5,250 | 650 | 1001t -> 0x9 -> 9 |
| 6,275 | 5,625 | 500 | 1000t -> 0x8 -> 8 |
| 6,000 | 6,000 | 450 | 0111t -> 0x7 -> 7 |
| 5,625 | 6,375 | 400 | 0110t -> 0x6 -> 6 |
| 5,250 | 6,750 | 350 | 0101t -> 0x5 -> 5 |
| 4,875 | 7,125 | 300 | 0100t ->0x4 -> 4 |
| 4,500 | 7,500 | 250 | 0011t -> 0x3 -> 3 |
| 4,125 | 7,875 | 200 | 0010t ->0x2 -> 2 |
| 3,750 | 8,250 | 150 | 0001t -> 0x1 -> 1 |
| 3,375 | 8,625 | 100 | 0000t -> 0x0 -> 0 |

Die bisher offenbarten bevorzugten Ausführungsversionen 1 und 2 kommunizieren auf dem Positiven Pegel des CP-Signals 4. Auch die Pulsbreite wird zur Kommunikation verwendet. Die bedeutet, dass der Diagnose-PC 8 an Stelle des batterieelektrischen Fahrzeugs 6 tritt und somit das Laden der Batterie des Fahrzeugs und die Kommunikation nicht gleichzeitig möglich ist.

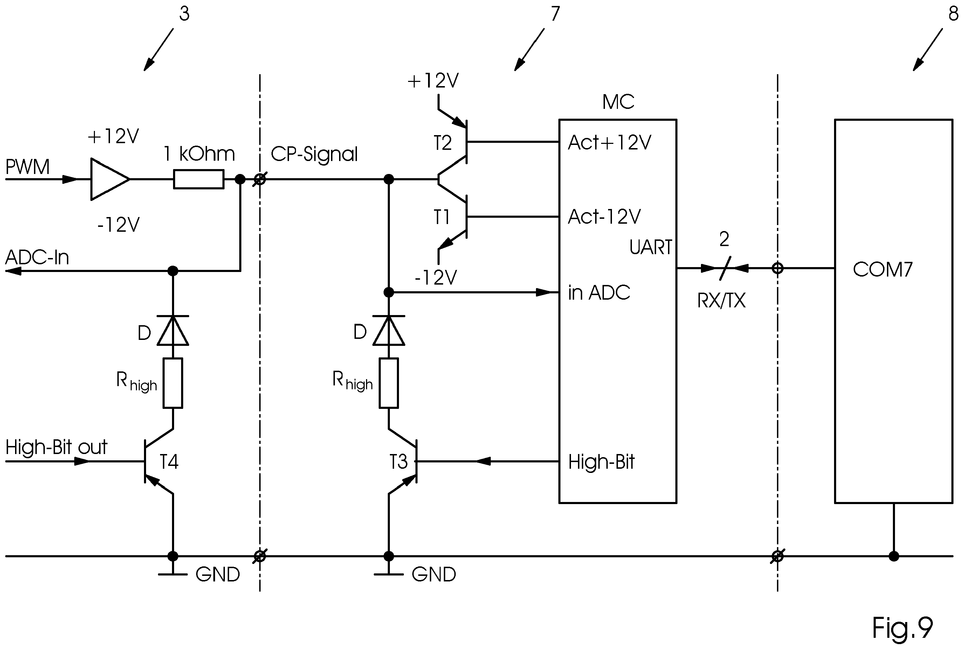

Um dies zu ermöglichen, wird eine dritte bevorzugte Ausführungsvariante offenbart, welche diese Einschränkung beseitigt. Bei der Variante 3 wird nur der negative Pegel des CP-Signals 4 für die Kommunikation mit dem Diagnose-PC 8 verwendet. Da beide Kommunikationsrichtungen zwischen Diagnose-PC 8 und IC-CPD 3 den negativen Pegel verwenden, ist allerdings nur ein halb-duplex-Betrieb möglich. Das heißt die IC-CPD 3 antwortet nur auf eine Anfrage vom Diagnose-PC 8; ein selbständiges Senden ist der IC-CPD 3 nicht erlaubt (Master-Slave-Betrieb). Für die Übertragung werden den logischen Zuständen low und high je ein Spannungspegel zugeordnet: Bsp.: low -12V undhigh - 11.5V. Der High-Pegel ist durch die Auswahl der Bauteile T3/4 R_{low} und D (sh. Figur 9) festgelegt. Die Pegel wurden in diesem Beispiel, so gewählt dass sie sich noch im Toleranzbereich der Norm IEC-61851 (-12V +/-1V) bewegen. Die oben beschriebene Vorgehensweise beim Verbindungsaufbau wird nur verwendet, wenn der Kommunikations-Adapter 7 feststellt, dass sich die IC-CPD 3 im Zustand A befindet. Ist die IC-CPD 3 bereits im Ladebetrieb (Zustand C) oder im Zustand D kann auf einen Verbindungsaufbau verzichtet werden.

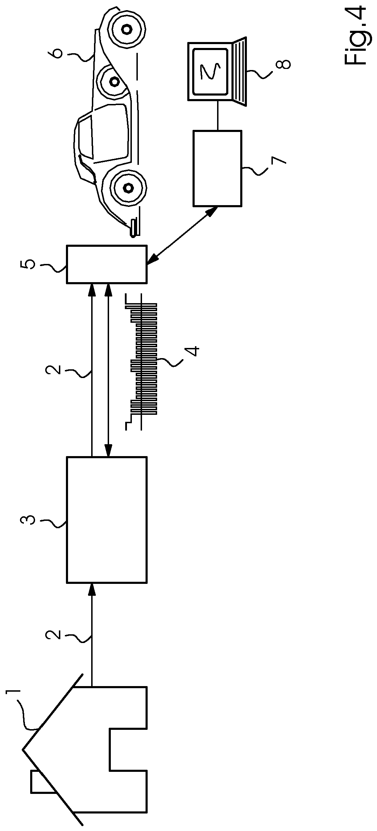

Für die dritte bevorzugte Ausführungsvariante ist eine entsprechende Änderung der Hardware des Adapters 7 notwendig. Diese wird im Schaltplan von Figur 9 dargestellt. Der schematische Zusammenhang für das Gesamtsystem zum gleichzeitigen Laden und Kommunizieren mit der IC-CPD 3 über den Adapter 7, ist hingegen in Figur 4 zu sehen.

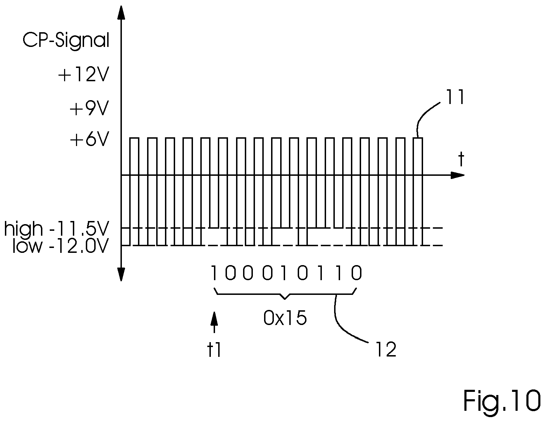

Figur 10 zeigt beispielhaft den Signalverlauf für die erfindungsgemäße Kommunikation während des Ladens. Zum Zeitpunkt t1 wird ein Startbit (-11.5V) übertragen, gefolgt von 8 Datenbits (0010110t->0x15). Die Übertragung verwendet weder ein Stop-Bit noch ein Paritäts-Bit. Die erreichte Übertragungsrate ist 111Byte/sec.

Da die Übertragungsrate in der dritten bevorzugten Ausführungsvariante sehr niedrig ist, wird eine vierte bevorzugte Ausführungsvariante vorgestellt. Die Variante 4 unterscheidet sich von der Variante 3 lediglich dadurch, dass die Übertragung einen Bytes zeitlich so gestaucht wird, dass es in die Low-Phase eines PWM-Signals 13 passt. Die verwendete Hardware bleibt unverändert. Lediglich die Firmware im Mikrokontroller des Adapters 7 und in der IC-CPD 3 zur Auswertung des CP-Signals 4 ist angepasst.

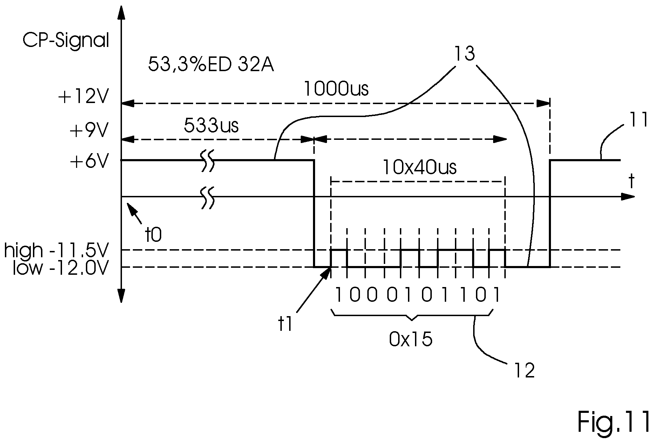

Figur 11 zeigt dabei das erfindungsgemäße Verfahren für die vierte bevorzugte Ausführungsvariante. Die Position des Start-Bits (t1) ist immer synchron zur positiven Flanke des PWM-Signals 13 bei t0+560µs. Somit kann sichergestellt werden, dass mit 32A (53% ED) noch geladen werden kann und die Übertragung nicht im positiven Teil des PWM-Signals 13 erfolgt. In Figur 11 wird dargestellt, wie ein Start-Bit, 8 Datenbits (MSB-first) und ein Paritäts-Bit übertragen werden. Durch die Verwendung eines Parität-Bits kann ein Übertragungsfehler erkannt werden. Die erreichte Übertragungsrate ist somit 1000 Byte/sec und damit deutlich höher, als in der dritten bevorzugten Ausführungsvariante.

### Bezugszeichenliste

- 1: Stromnetz
- 2: Ladestrom / Energie
- 3: IC-CPD
- 4: CP-Datensignal
- 5: Fahrzeugkupplung
- 6: batterieelektrisches Fahrzeug
- 7: Kommunikationsadapter
- 8: Diagnose-PC
- 9: USB-Verbindung
- 10: Fahrzeugstecker
- 11: CP-Datenleitung
- 12: Amplitudenmoduliertes Signal
- 13: Pulsweitenmoduliertes Signal

## Patentansprüche

1. Verfahren zur Kommunikation zwischen einem externen Rechner (8) und einem Ladekabel mit einer In-Kabel-Kontrollbox (3) zur Aufladung batterieelektrischer Fahrzeuge (6), wobei das Ladekabel eine Datenleitung (11) zur Kommunikation mit dem Fahrzeug (6) aufweist und zwischen der In-Kabel-Kontrollbox (3) des Ladekabels und dem Rechner (8) eine Hardware-Schnittstelle (7) den Zugriff auf die Datenleitung (11) mittels des Rechners (8) ermöglicht, wobei Daten für die In-Kabel-Kontrollbox (3) des Ladekabels vom Rechner (8) an die Hardware-Schnittstelle (7) gesendet werden, von der Hardware-Schnittstelle (7) auf das Signal (4) der Datenleitung (11) moduliert und somit an die In-Kabel-Kontrollbox (3) des Ladekabels übermittelt werden, während Daten für den Rechner (8) von der In-Kabel-Kontrollbox (3) des Ladekabels über das Signal (4) der Datenleitung (11) gesendet, von der Hardware-Schnittstelle (7) konvertiert und an den Rechner (8) geschickt werden,
wobei die Daten von der In-Kabel-Kontrollbox (3) des Ladekabels an den Rechner (8) von der In-Kabel-Kontrollbox (3) des Ladekabels durch eine Modifikation der Pulsweite (13) des Signals (4) der Datenleitung (11) moduliert und an die Hardware-Schnittstelle (7) gesendet werden, welche die Daten an den Rechner (8) weiterleitet, wobei die Daten vom Rechner (8) an die In-Kabel-Kontrollbox (6) des Ladekabels von der Hardware-Schnittstelle (7) durch eine Modifikation des Spannungspegels (12), insbesondere durch Amplitudenumtastung, auf das Signal (4) der Datenleitung (11) moduliert werden,
**dadurch gekennzeichnet,**
**dass** zum Senden von Daten vom Rechner (8) an die In-Kabel-Kontrollbox (3) des Ladekabels nur der negative Teils des Spannungspegels (12) modifiziert wird, um den Datenaustausch zwischen der In-Kabel-Kontrollbox (3) des Ladekabels und dem Rechner (8) parallel zu einem Ladevorgang eines batterieelektrischen Fahrzeugs (6) über das Ladekabel durchzuführen.

2. Verfahren nach Anspruch 1,
**dadurch gekennzeichnet,**
**dass** der Datenaustausch zwischen der Hardware-Schnittstelle (7) und Rechner (8) mittels serieller Schnittstelle realisiert wird und die Konvertierung der Daten von der Hardware-Schnittstelle (7) auf serielles-Protokoll durchgeführt wird.

3. Verfahren nach einem der vorherigen Ansprüche,
**dadurch gekennzeichnet,**
**dass** die von der In-Kabel-Kontrollbox (3) des Ladekabels an den Rechner (8) gesendeten Daten von der Hardware-Schnittstelle (7) für die Konvertierung durch Ausmessen der Pulsweite (13) des Signals (4) der Datenleitung (11) und deren zeitlicher Abfolge berechnet werden.

4. Verfahren nach einem der vorherigen Ansprüche,
**dadurch gekennzeichnet,**
**dass** der Datenaustausch bidirektional und duplexfähig erfolgt, indem gleichzeitig die Pulsweite (13) des Signals (4) der Datenleitung (11) moduliert wird und die Modifikation des Spannungspegels (12) stattfindet.

5. Verfahren nach einem der vorherigen Ansprüche,
**dadurch gekennzeichnet,**
**dass** für die Modulation der Pulsweite (13) des Signals (4) der Datenleitung (11) mehrere verschiedene Pulsweiten und für die Modifikation des Spannungspegels (12) mehrere verschiedene Spannungspegel verwendet werden, um die Datentransferrate des Datenaustauschs zu erhöhen.

6. Verfahren nach einem der vorherigen Ansprüche,
**dadurch gekennzeichnet,**
**dass** die Modifikation des negativen Spannungspegels (12) zeitlich so gestaucht wird, dass die modifizierten Spannungspegel (12) in die Low-Phase eines PWM-Signals (13) passen, um damit die Datentransferrate des Datenaustauschs zu erhöhen.

7. Verfahren nach einem der vorherigen Ansprüche,
**dadurch gekennzeichnet,**
**dass** die Daten von der In-Kabel-Kontrollbox (3) des Ladekabels an den Rechner (8) Daten zur Fehlerdiagnose und Betriebsstatistik umfassen.

8. Verfahren nach einem der vorherigen Ansprüche,
**dadurch gekennzeichnet,**
**dass** die Daten vom Rechner (8) an die In-Kabel-Kontrollbox (3) des Ladekabels Softwareupdates für die In-Kabel-Kontrollbox (3) des Ladekabels umfassen.

## Claims

1. Method for communication between an external computer (8) and a charging cable with an in-cable control box (3) for charging battery-electric vehicles (6), wherein the charging cable has a data line (11) for communication with the vehicle (6) and a hardware interface (7) between the in-cable control box (3) of the charging cable and the computer (8) allows access to the data line (11) by means of the computer (8), wherein data for the in-cable control box (3) of the charging cable are sent from the computer (8) to the hardware interface (7), are modulated to the signal (4) of the data line (11) by the hardware interface (7) and thus forwarded to the in-cable control box (3) of the charging cable, whereas data for the computer (8) are sent by the in-cable control box (3) of the charging cable via the signal (4) of the data line (11), converted by the hardware interface (7) and sent to the computer (8),
wherein the data from the in-cable control box (3) of the charging cable to the computer (8) are modulated by the in-cable control box (3) of the charging cable by a modification of the pulse width (13) of the signal (4) of the data line (11) and sent to the hardware interface (7), which forwards the data to the computer (8),
wherein the data from the computer (8) to the in-cable control box (3) of the charging cable are modulated onto the signal (4) of the data line (11) by the hardware interface (7) by a modification of the voltage level (12), in particular by amplitude shift keying,
**characterized**
**in that** in order to send data from the computer (8) to the in-cable control box (3) of the charging cable, only the negative part of the voltage level (12) is modified to implement the data exchange between the in-cable control box (3) of the charging cable and the computer (8) in parallel with a charging operation of a battery-electric vehicle (6) via the charging cable.

2. Method according to claim 1,
**characterized**
**in that** the data exchange between the hardware interface (7) and the computer (8) is implemented by means of a serial interface and in that the hardware interface (7) converts the data to a serial protocol.

3. Method according to any one of the preceding claims,
**characterized**
**in that** the data sent from the in-cable control box (3) of the charging cable to the computer (8) are calculated by the hardware interface (7) for conversion by measuring the pulse width (13) of the signal (4) of the data line (11) and the succession in time thereof.

4. Method according to any one of the preceding claims,
**characterized**
**in that** that the data exchange occurs in a bidirectional and duplex-enabled way by simultaneously modulating the pulse width (13) of the signal (4) of the data line (11) and modifying the voltage level (12).

5. Method according to any one of the preceding claims,
**characterized**
**in that** a number of different pulse widths are used for the modulation of the pulse width (13) of the signal (4) of the data line (11) and a number of different voltage levels are used for the modification of the voltage level (12) to increase the data transfer rate of the data exchange.

6. Method according to any one of the preceding claims,
**characterized**
**in that** the modification of the negative voltage level (12) is compressed in terms of time in such a way that the modified voltage levels (12) fit into the low phase of a PWM signal (13) thus to increase the data transfer rate of the data exchange.

7. Method according to any one of the preceding claims,
**characterized**
**in that** the data from the in-cable control box (3) of the charging cable to the computer (8) comprise error diagnosis data and operation statistics data.

8. Method according to any one of the preceding claims,
**characterized**
**in that** the data from the computer (8) to the in-cable control box (3) of the charging cable comprise software updates for the in-cable control box (3) of the charging cable.

## Revendications

1. Procédé de communication entre un calculateur externe (8) et un câble de recharge avec un boîtier de contrôle intégré au câble (3) (ICCB) pour la recharge de véhicules à batterie électrique (6), pour lequel le câble de recharge présente une ligne de données (11) pour la communication avec le véhicule (6) et une interface matérielle (7) permet l'accès à la ligne de données (11) au moyen du calculateur (8) entre le boîtier de contrôle intégré au câble (3) du calculateur et le calculateur (8), pour lequel les données pour le boîtier de contrôle intégré au câble (3) du câble de recharge sont envoyées par le calculateur (8) à l'interface matérielle (7), modulées par l'interface matérielle (7) sur le signal (4) du câble de données (11) et donc transmises au boîtier de contrôle intégré au câble (3) du câble de recharge, tandis que les données destinées au calculateur (8) sont envoyées du boîtier de contrôle intégré au câble (3) du câble de recharge via le signal (4) de la ligne de données (11), converties par l'interface matérielle (7) et envoyées au calculateur (8),
pour lequel les données du boîtier de contrôle intégré au câble (3) du câble de recharge destinées au calculateur (8) sont modulées par le boîtier de contrôle intégré au câble (3) du câble de recharge par une modification de la largeur d'impulsion (13) du signal (4) de la ligne de données (11) et envoyées à l'interface matérielle (7), qui transmet les données au calculateur (8), les données du calculateur (8) allant au boîtier de contrôle intégré au câble (3) du câble de recharge étant modulées par l'interface matérielle (7) par une modification du niveau de tension (12), notamment par déplacement d'amplitude sur le signal (4) de la ligne de données (11),
**caractérisé en ce**
**que**, pour l'envoi de données du calculateur (8) au boîtier de contrôle intégré au câble (3) du câble de recharge, seule la partie négative du niveau de tension (12) est modifiée pour exécuter l'échange de données entre le boîtier de contrôle intégré au câble (3) du câble de recharge et le calculateur (8) parallèlement à une opération de recharge d'un véhicule à batterie électrique (6) via le câble de recharge.

2. Procédé selon la revendication 1,
**caractérisé en ce**
**que** l'échange de données entre l'interface matérielle (7) et l'ordinateur (8) est réalisé au moyen d'une interface série et que la conversion des données par l'interface matérielle (7) s'effectue sur le protocole série.

3. Procédé selon l'une des revendications précédentes,
**caractérisé en ce**
**que** les données envoyées par le boîtier de contrôle intégré au câble (3) du câble de recharge au calculateur (8) sont calculées par l'interface matérielle (7) pour la conversion par mesure de la largeur d'impulsion (13) du signal (4) de la ligne de données (11) et sa séquence temporelle.

4. Procédé selon l'une des revendications précédentes,
**caractérisé en ce**
**que** l'échange de données s'effectue en mode bidirectionnel et apte au duplex, en raison du fait que la largeur d'impulsion (13) du signal (4) de la ligne de données (11) est modulée et que la modification du niveau de tension (12) a lieu.

5. Procédé selon l'une des revendications précédentes,
**caractérisé en ce**
**que** plusieurs largeurs d'impulsions différentes sont utilisées pour la modulation de la largeur d'impulsion (13) du signal (4) de la ligne de données (11), et que plusieurs niveaux de tension différents sont utilisés pour la modification du niveau de tension (12), pour augmenter la vitesse de transfert de données de l'échange de données.

6. Procédé selon l'une des revendications précédentes,
**caractérisé en ce**
**que** la modification du niveau de tension négatif (12) est comprimée dans le temps de sorte que les niveaux de tension modifiés (12) rentrent dans la phase Low d'un signal MLI (13) pour augmenter ainsi la vitesse de transfert de données de l'échange de données.

7. Procédé selon l'une des revendications précédentes,
**caractérisé en ce**
**que** les données du boîtier de contrôle intégré au câble (3) du câble de recharge destinées au calculateur (8) comprennent des données pour le diagnostic de défauts et les statistiques de fonctionnement.

8. Procédé selon l'une des revendications précédentes,
**caractérisé en ce**
**que** les données du calculateur (8) au boîtier de contrôle intégré au câble (3) destinées au câble de recharge comprennent des mises à jour du logiciel pour le boîtier de contrôle intégré au câble (3) du câble de recharge.
